(19) Europäisches Patentamt
European Patent Office
Office européen des brevets

(11) **EP 2 843 489 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(51) Int Cl.:
***G05B 19/404*** *(2006.01)*

(21) Anmeldenummer: **13182811.3**

(22) Anmeldetag: **03.09.2013**

(54) **Regelanordnung mit kopplungsoptimierter Ermittlung einer resultierenden Geschwindigkeit**

Regulating assembly with coupling-optimised determination of a resulting velocity

Agencement de régulation avec détermination optimisée en termes de couplage d'une vitesse produite

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.03.2015 Patentblatt 2015/10**

(73) Patentinhaber: **Siemens Aktiengesellschaft**
**80333 München (DE)**

(72) Erfinder:
• **Forster, Gerhard**
**90592 Schwarzenbruck (DE)**
• **Hamm, Carsten**
**91058 Erlangen (DE)**
• **Kubik, Alexander**
**91058 Erlangen (DE)**
• **Künzel, Stefan**
**91056 Erlangen (DE)**
• **Schäfers, Elmar**
**90763 Fürth (DE)**
• **Wedel, Bernd**
**91096 Möhrendorf (DE)**

(56) Entgegenhaltungen:
EP-A1- 2 543 620        WO-A2-2011/019147
DE-B3- 10 302 374        US-A1- 2005 093 492

EP 2 843 489 B1

## Beschreibung

Die vorliegende Erfindung betrifft eine Regelanordnung zum Regeln der Geschwindigkeit eines elektrischen Antriebs, der über eine elastische gedämpfte Kopplung auf eine Last wirkt,

- wobei die Regelanordnung Ermittlungseinrichtungen aufweist, mittels derer basierend auf Messwerten eine Geschwindigkeit des elektrischen Antriebs und eine Geschwindigkeit der Last ermittelt werden,
- wobei die Regelanordnung eine Verknüpfungseinrichtung aufweist, mittels derer durch eine Verknüpfung der beiden Geschwindigkeiten eine resultierende Geschwindigkeit ermittelt wird,
- wobei die Regelanordnung einen Geschwindigkeitsregler aufweist, dem die resultierende Geschwindigkeit als Geschwindigkeitsistwert zugeführt wird, dem als weitere Eingangsgröße ein Geschwindigkeitssollwert zugeführt wird und von dem eine Stellgröße für den elektrischen Antrieb ausgegeben wird,
- wobei die Ermittlungseinrichtungen derart ausgebildet sind, dass die Ermittlung der Geschwindigkeit des Antriebs und der Geschwindigkeit der Last derart erfolgt, dass diese beiden Geschwindigkeiten jederzeit in einem konstanten Verhältnis stünden, wenn die Kopplung absolut starr wäre, und
- wobei die Verknüpfungseinrichtung Multiplizierer und einen Addierer aufweist, mittels derer die resultierende Geschwindigkeit durch Wichtung der ermittelten Geschwindigkeiten mit einem jeweiligen Wichtungsfaktor und nachfolgende Addition der gewichteten Geschwindigkeiten ermittelt wird, wodurch ,
- dass dem Geschwindigkeitsregler ein Stromregler unterlagert ist,
- dass die Stellgröße des Geschwindigkeitsreglers ein dem Stromregler zugeführter Stromsollwert ist,
- dass dem Stromregler als weitere Eingangsgröße ein Stromistwert zugeführt wird und
- dass dem Stromregler als Vorsteuersignal eine Differenz der Lage des elektrischen Antriebs und der Lage der Last zugeführt wird.

Die ermittelte resultierende Geschwindigkeit ist keine Geschwindigkeit, bei welcher nur die Geschwindigkeit der Last oder nur die Geschwindigkeit des Antriebs, nicht aber die Geschwindigkeit des jeweils anderen Elements (Antrieb oder Last) gefiltert ist. Denn dann wäre die Bedingung nicht erfüllt, dass die Ermittlung der Geschwindigkeiten derart erfolgt, dass die Geschwindigkeiten jederzeit in einem konstanten Verhältnis stünden, wenn die Kopplung absolut starr wäre. Eine Filterung ist zwar möglich. Falls eine Filterung erfolgt, muss sie jedoch für beide Geschwindigkeiten in gleicher Weise erfolgen.

Die vorliegende Erfindung betrifft weiterhin ein Computerprogramm, das Maschinencode umfasst, der von einer Regelanordnung für einen elektrischen Antrieb unmittelbar ausführbar ist, wobei der elektrische Antrieb über eine elastische gedämpfte Kopplung auf eine Last wirkt, wobei die Ausführung des Maschinencodes bewirkt, dass die Regelanordnung wie obenstehend beschrieben ausgebildet ist.

Eine derartige Regelanordnung ist beispielsweise aus der US 2005/0 093 492 A1 bekannt. Auch der DE 103 02 374 B3 ist ein derartiger Offenbarungsgehalt zu entnehmen.

Die Dynamik und die Genauigkeit der Verstellung von elektrisch angetriebenen Lasten - beispielsweise Vorschubachsen bei Maschinen oder Robotern - wird meist durch Eigenschaften der Mechanik begrenzt. Die effektiv verfügbaren Gebersignale bestimmen dabei zusammen mit anderen Faktoren die Grenzen der Regelkreise.

Es ist eine Vielzahl von Vorgehensweisen bekannt, um die Regelkreise von elektrischen Antrieben zu optimieren. Meist liegt den Regelkreisen eine kaskadierte Struktur zu Grunde, bei der einem Geschwindigkeitsregler ein Stromregler unterlagert ist. In vielen Fällen ist zusätzlich dem Geschwindigkeitsregler ein Lageregler überlagert. Die Optimierung des Geschwindigkeitskreises ist oftmals entscheidend für eine hohe Dynamik des geregelten Systems in seiner Gesamtheit.

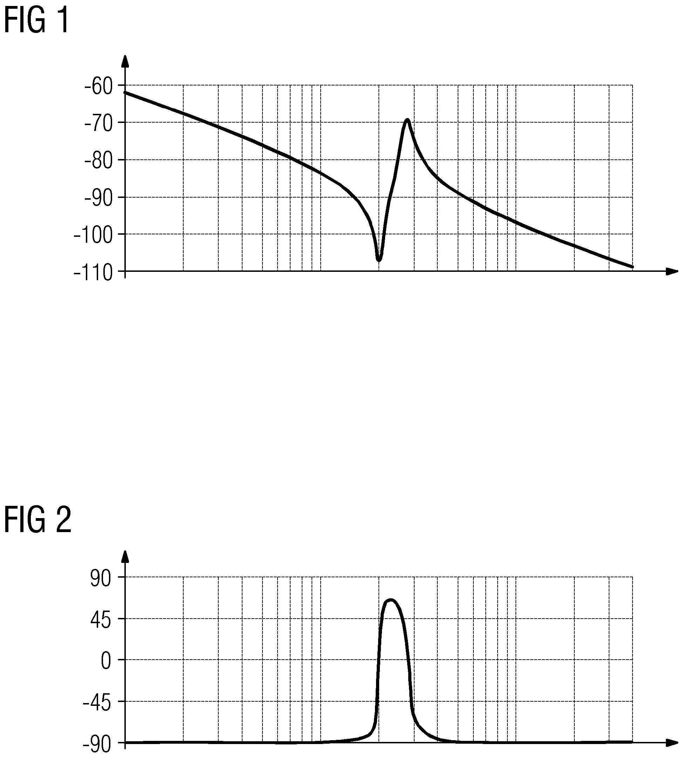

Die Problematik der Optimierung wird nachstehend am Beispiel eines sogenannten Zweimassenschwingers (also eines schwingungsfähigen Systems, das zwei Massen aufweist, die über eine elastische gedämpfte Kopplung miteinander verbunden sind) in Verbindung mit den FIG 1 und 2 näher erläutert. FIG 1 zeigt die Amplitude des Frequenzgangs des Zweimassenschwingers, FIG 2 die Phase. Die Frequenz ist in beiden FIG nach rechts in logarithmischem Maßstab aufgetragen, die Amplitude und die Phase linearem Maßstab nach oben. Aus den FIG 1 und 2 ist ersichtlich, dass der Frequenzgang eine Tilgerfrequenz (konjugiert komplexe Nullstelle) und eine Resonanzfrequenz (konjugiert komplexe Polstelle) aufweist. Sowohl bei der Polstelle als auch bei der Nullstelle ist die Dämpfung in der Regel relativ gering. Die Tilgerfrequenz ist kleiner als die Resonanzfrequenz.

Wird das System mit einer Proportionalverstärkung Kp geregelt, so verschieben sich die konjugiert komplexen Pole der Resonanzfrequenz mit zunehmender Verstärkung in die Nullstellen der Tilgerfrequenz. Abhängig von der gewählten Verstärkung ändert sich die Dämpfung des Poles. Die möglichen Pollagen liegen bei gegebener Regelstrecke fest.

Eine Möglichkeit der Antriebsoptimierung besteht darin, die Proportionalverstärkung Kp derart zu wählen, dass sich eine möglichst hohe Dämpfung ergibt (sogenannte dämpfungsoptimale Einstellung). Falls eine Messung an der Last möglich ist, besteht ein weiteres bekanntes Verfahren darin, zunächst eine hohe Verstärkung zu wählen. Dadurch wandern die konjugiert komplexen Pole sehr nahe an die Nullstellen heran. Die Eigenfrequenz sinkt dadurch. Das System ist jedoch weiterhin schlecht gedämpft. In einer weiteren Rückführung wird der Messwert der Last geeignet zurückgeführt. Dadurch wird die Resonanz gedämpft. Dieses Verfahren zur aktiven Schwingungsdämpfung ist in der DE 102 46 093 C1 näher erläutert.

Bei beiden bekannten Verfahren ergeben sich die Grenzen der erreichbaren Dynamik (Bandbreite, Dämpfung und dergleichen) aus der Lage der Polstellen und der Nullstellen der mechanischen Struktur. Die Pole des geregelten Systems liegen stets zwischen den Nullstellen und den Polen der ungeregelten Strecke und hierbei tendenziell näher an den Nullstellen, also bei kleineren Frequenzen.

Die Regelstrecke wird bestimmt durch die Massen bzw. Trägheitsmomente der Massen des Zweimassenschwingers (d.h. des elektrischen Antriebs und der Last) und die Federsteifigkeiten und die Dämpfung der Kopplung. Im Stand der Technik kann die Frequenz der Nullstelle (Tilgerfrequenz) nur durch die Gestaltung der geregelten Strecke als solcher beeinflusst werden, beispielsweise durch eine Erhöhung der Steifigkeit. Insbesondere bei einem hohen Verhältnis von Last- zu Antriebsmasse kann im Stand der Technik bei der Tilgerfrequenz kein optimales Reglerverhalten erreicht werden.

Die Aufgabe der vorliegenden Erfindung besteht darin, eine Regelanordnung zu schaffen, mittels derer unabhängig von dem Verhältnis der Massen oder Trägheitsmomente des elektrischen Antriebs und der Last stets eine optimale Auslegung einer Geschwindigkeitsregelung möglich ist.

Die Aufgabe wird durch eine Regelanordnung mit den Merkmalen des Anspruchs 1 gelöst. Vorteilhafte Ausgestaltungen der erfindungsgemäßen Regelanordnung sind Gegenstand der abhängigen Ansprüche 2 bis 7.

Erfindungsgemäß wird eine Regelanordnung der eingangs genannten Art dadurch ausgestaltet,

- dass dem Geschwindigkeitsregler ein Stromregler unterlagert ist,
- dass die Stellgröße des Geschwindigkeitsreglers ein dem Stromregler zugeführter Stromsollwert ist
- dass dem Stromregler als weitere Eingangsgröße ein Stromistwert zugeführt wird und
- dass dem Stromregler als Vorsteuersignal eine Differenz der Lage des elektrischen Antriebs und der Lage der Last zugeführt wird.

Aufbauend auf der erfindungsgemäßen Ausgestaltung der Regelanordnung können beliebige Optimierungen der Regelanordnung erfolgen. Derartige Optimierungen sind aus dem Stand der Technik - beispielsweise der DE 102 46 093 C1 - als solche bereits bekannt.

Es ist möglich, dass die Wichtungsfaktoren einmalig fest eingestellt werden. Es ist jedoch ebenso möglich, dass die Regelanordnung eine Bestimmungseinrichtung aufweist, mittels derer die Wichtungsfaktoren von der Regelanordnung selbsttätig bestimmt werden. Der Begriff "selbsttätig" ist in diesem Zusammenhang derart zu verstehen, dass ein Bediener zwar eventuell die Bestimmung der Wichtungsfaktoren auslöst, jedoch keinerlei Vorgabe von Werten macht, die für die Bestimmung der Wichtungsfaktoren verwendet werden. Diese Ausgestaltung führt - bei einer geeigneten Ausgestaltung der Regelanordnung - unabhängig von einer Eingabe eines Benutzers stets zu einer guten Bestimmung der Wichtungsfaktoren. Insbesondere kann die Bestimmungseinrichtung zu diesem Zweck den Wichtungsfaktor für die Geschwindigkeit des Antriebs auf den Wert 1 und hiermit korrespondierend den Wichtungsfaktor für die Geschwindigkeit der Last auf den Wert 0 setzen, sodann den Frequenzgang erfassen und anhand einer Auswertung des erfassten Frequenzgangs die Wichtungsfaktoren bestimmen. Alternativ kann die Regelanordnung zu diesem Zweck die Wichtungsfaktoren nacheinander auf verschiedene Werte setzen, jeweils den korrespondierenden Frequenzgang erfassen und anhand eines Vergleichs der sich ergebenden Frequenzgänge die Wichtungsfaktoren bestimmen.

Alternativ ist es möglich, dass Regelanordnung eine Mensch-Maschine-Schnittstelle aufweist, über welche die Wichtungsfaktoren der Regelanordnung von einem Bediener direkt oder indirekt vorgegeben werden. Im Falle einer indirekten Vorgabe ist es beispielsweise möglich, dass der Regelanordnung vom Bediener über die Mensch-Maschine-Schnittstelle eine Gesamtmasse der Last vorgegeben wird oder dass die Gesamtmasse der Last sich aus einem konstanten und einem veränderlichen Anteil zusammensetzt und der Regelanordnung vom Bediener über die Mensch-Maschine-Schnittstelle der veränderliche Anteil der Last vorgegeben wird. Die Regelanordnung ermittelt in diesem Fall die Wichtungsfaktoren anhand der Gesamtmasse der Last und einer Gesamtmasse des Antriebs.

Für die Ermittlung der Geschwindigkeiten sind verschiedene Vorgehensweisen möglich. Insbesondere ist es möglich, dass die Ermittlungseinrichtungen derart ausgebildet sind, dass sie die Geschwindigkeiten direkt erfassen oder erfasste Lagewerten differenzieren oder erfasste Beschleunigungen integrieren.

Es ist möglich, dass die Regelanordnung mit diskreten Bauelementen aufgebaut ist. Vorzugsweise jedoch ist die Regelanordnung softwaretechnisch realisiert. In diesem Fall weist die Regelanordnung eine Recheneinrichtung auf, die ein in einem internen Speicher der Regelanordnung hinterlegtes Computerprogramm ausführt. Das Computerprogramm umfasst von der Recheneinrichtung unmittelbar ausführbaren Maschinencode. Die Ausführung des Maschinencodes durch die Recheneinrichtung bewirkt in diesem Fall die Ausbildung der Regelanordnung.

Die Aufgabe wird weiterhin durch ein Computerprogramm mit den Merkmalen des Anspruchs 8 gelöst. Erfindungsgemäß bewirkt die Ausführung des Maschinencodes, dass die Regelanordnung erfindungsgemäß ausgebildet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1           die Amplitude des Frequenzgangs eines Zweimassenschwingers,

FIG 2           die korrespondierende Phase des Frequenzgangs des Zweimassenschwingers und

FIG 3 bis 5     je eine Regelanordnung.

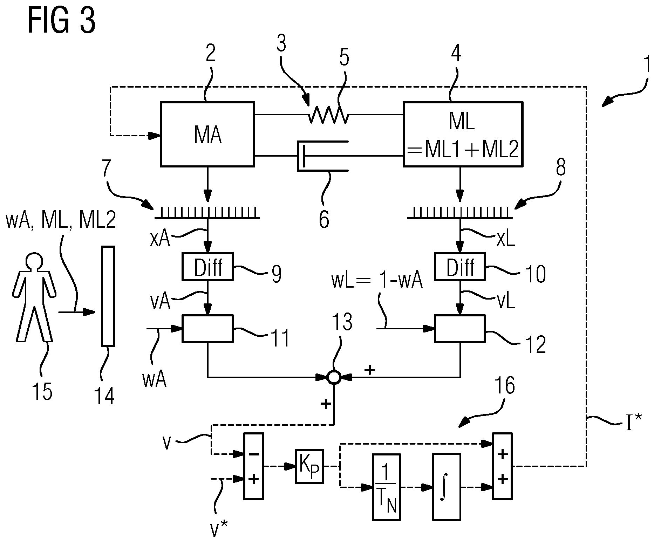

Gemäß FIG 3 soll mittels einer Regelanordnung 1 eine Geschwindigkeitsregelung eines elektrischen Antriebs 2 erfolgen. Der elektrische Antrieb 2 wirkt über eine Kopplung 3 auf eine Last 4. Die Kopplung 3 ist elastisch-gedämpft. Dies ist in FIG 3 dadurch angedeutet, dass die Kopplung 3 durch die Kombination eines Federelements 5 und eines Dämpferelements 6 dargestellt ist.

Im Rahmen der Geschwindigkeitsregelung werden eine Geschwindigkeit vA des elektrischen Antriebs 2 und eine Geschwindigkeit vL der Last 4 ermittelt. Insbesondere ist es möglich, dass entsprechend der Darstellung in FIG 3 mittels einer jeweiligen Messeinrichtung 7, 8 Lagewerte xA, xL erfasst werden, die in den Messeinrichtungen 7, 8 nachgeordneten Differenzierern 9, 10 differenziert werden. Alternativ wäre es möglich, die Geschwindigkeiten vA, vL durch direkte Erfassung zu ermitteln oder korrespondierende Beschleunigungen zu erfassen und die Geschwindigkeiten vA, vL durch Integration der erfassten Beschleunigungen zu ermitteln. Auch Kombinationen - beispielsweise die Ermittlung der Geschwindigkeiten vA, vL durch eine gewichtete oder gewichtete Mittelung von durch Differenzieren aus Lagewerten xA, xL ermittelten Geschwindigkeiten und durch Integrieren von Beschleunigungen ermittelten Geschwindigkeiten - sind möglich. Unabhängig davon, welcher Weg konkret beschritten wird, erfolgt die Ermittlung der Geschwindigkeiten vA, vL jedoch derart, dass die Geschwindigkeiten vA, vL des Antriebs 2 und der Last 4 jederzeit in einem konstanten Verhältnis stünden, wenn die Kopplung 3 absolut starr wäre. Dies gilt auch dann, wenn eine der beiden Geschwindigkeiten vA, vL eine rotatorische Geschwindigkeit (= Drehzahl) und die andere der beiden Geschwindigkeiten vA, vL eine lineare Geschwindigkeit ist. In diesem Fall ist lediglich eine Umrechnung einer der beiden Geschwindigkeiten vA, vL erforderlich.

Durch eine Verknüpfung der beiden Geschwindigkeiten vA, vL wird sodann eine resultierende Geschwindigkeit v ermittelt. Insbesondere werden die Geschwindigkeiten vA, vL zunächst in Multiplizierern 11, 12 mit einem jeweiligen Wichtungsfaktor wA, wL gewichtet. Aus FIG 3 ist hierbei ersichtlich, dass die Summe der Wichtungsfaktoren wA, wL gleich 1 ist. Dies gilt unabhängig davon, welche genauen Werte die Wichtungsfaktoren wA, wL aufweisen.

Die gewichteten Geschwindigkeiten werden in einem Addierer 13 zur resultierenden Geschwindigkeit v addiert. Die resultierende Geschwindigkeit v wird einem Geschwindigkeitsregler 16 als Geschwindigkeitsistwert zugeführt. Als weitere Eingangsgröße wird dem Geschwindigkeitsregler 16 ein Geschwindigkeitssollwert v* zugeführt. Von dem Geschwindigkeitsregler 16 wird eine Stellgröße I* für den elektrischen Antrieb 2 ausgegeben.

Gemäß der Darstellung in FIG 3 ist der Geschwindigkeitsregler 16 als PI-Regler ausgebildet. Er weist daher eine Proportionalverstärkung Kp und eine sogenannte Nachstellzeit TN auf. Diese Ausgestaltung ist üblich. Der Geschwindigkeitsregler 16 könnte jedoch ebenso andersartig ausgebildet sein, also nicht als PI-Regler.

Es ist möglich, dass die Wichtungsfaktoren wA, wL der Regelanordnung 1 fest vorgegeben sind. Es sind jedoch alternative Vorgehensweisen möglich, bei denen die Wichtungsfaktoren wA, wL variabel sind.

So ist es beispielsweise möglich, dass die Wichtungsfaktoren wA, wL von der Regelanordnung 1 selbsttätig bestimmt werden. Beispielsweise kann die Regelanordnung 1 zunächst den Wichtungsfaktor wA für die Geschwindigkeit vA des Antriebs 2 auf 1 und hiermit korrespondierend den Wichtungsfaktor wL für die Geschwindigkeit vL der Last 4 auf 0 setzen, sodann den Frequenzgang erfassen (dies ist als solches bekannt) und anhand einer Auswertung des erfassten Frequenzgangs die Wichtungsfaktoren wA, wL bestimmen. Alternativ kann die Regelanordnung 1 beispielsweise die Wichtungsfaktoren wA, wL nacheinander auf verschiedene Werte setzen und jeweils den korrespondierenden Frequenzgang erfassen und sodann anhand eines Vergleichs der sich ergebenden Frequenzgänge die Wichtungsfaktoren wA, wL bestimmen.

Vorzugsweise ist der Regelanordnung 1 jedoch eine Mensch-Maschine-Schnittstelle 14 zugeordnet. In diesem Fall ist es alternativ möglich (und für viele Anwendungen sogar bevorzugt), dass die Wichtungsfaktoren wA, wL der Regelanordnung 1 von einem Bediener 15 über die Mensch-Maschine-Schnittstelle 14 vorgegeben werden.

Es ist möglich, dass durch den Bediener 15 eine direkte Vorgabe der Wichtungsfaktoren wA, wL erfolgt. In diesem Fall reicht es selbstverständlich aus, der Regelanordnung 1 einen einzigen der beiden Wichtungsfaktoren wA, wL oder deren Verhältnis zueinander oder einen ähnlichen Wert vorzugeben, da durch die zusätzliche Bedingung, dass die Summe der Wichtungsfaktoren wA, wL gleich 1 ist, die Wichtungsfaktoren wA, wL in jedem dieser Fälle eindeutig bestimmt sind.

Alternativ ist es möglich, dass die Wichtungsfaktoren wA, wL der Regelanordnung 1 vom Bediener 15 über die Mensch-Maschine-Schnittstelle 14 indirekt vorgegeben werden. In diesem Fall werden der Regelanordnung 1 vom Bediener 15 über die Mensch-Maschine-Schnittstelle 14 physikalische Parameter des Antriebs 2 und/oder der Last 4 vorgegeben, anhand derer die Regelanordnung 1 in der Lage ist, die Wichtungsfaktoren wA, wL zu ermitteln.

Beispielsweise ist es möglich, die Wichtungsfaktoren wA, wL anhand der bewegten Masse MA des elektrischen Antriebs 2 und der bewegten Masse ML (Gesamtmasse ML) der Last 4 zu bestimmen. Insbesondere kann der Regelanordnung 1 diesem Zweck vom Bediener 15 über die Mensch-Maschine-Schnittstelle 14 eine Gesamtmasse ML der Last 4 vorgegeben werden. Alternativ kann die Gesamtmasse ML der Last 4 sich aus einem konstanten Anteil ML1 und einem veränderlichen (variablen) Anteil ML2 zusammensetzen, so dass also die Beziehung

$$ML1 + ML2 = ML \tag{1}$$

gilt. Wenn in einem derartigen Fall der Regelanordnung 1 der konstante Anteil ML1 bekannt ist, reicht es aus, dass der Bediener 15 der Regelanordnung 1 den veränderlichen Anteil ML2 vorgibt und die Regelanordnung 1 die Gesamtmasse ML selbst ermittelt.

Die Wichtungsfaktoren wA, wL können nach Bedarf bestimmt sein bzw. von der Regelanordnung 1 bestimmt werden. In Einzelfällen kann es sinnvoll sein, einen der Wichtungsfaktoren wA, wL größer als 1 und hiermit korrespondierend den anderen der Wichtungsfaktoren wA, wL kleiner als 0 zu setzen. In der Regel ist es jedoch von Vorteil, die Wichtungsfaktoren wA, wL derart zu bestimmen, dass das Verhältnis der Wichtungsfaktoren wA, wL zueinander gleich dem Verhältnis der Anteile der bewegten Massen MA, ML an der gesamten Masse des Zweimassenschwingers ist oder darunter liegt. Es gelten also vorzugsweise die Beziehungen

$$\frac{MA}{MA + ML} \leq wA < 1 \tag{2}$$

und

$$0 < wL \leq \frac{ML}{MA + ML} \tag{3}$$

Insbesondere gelten vorzugsweise zusätzlich die Beziehungen

$$\frac{MA}{MA + ML} < wA \leq 1{,}2 \frac{MA}{MA + ML} \tag{4}$$

und/oder

$$0{,}8 \frac{ML}{MA + ML} \leq wL < \frac{ML}{MA + ML} \tag{5}$$

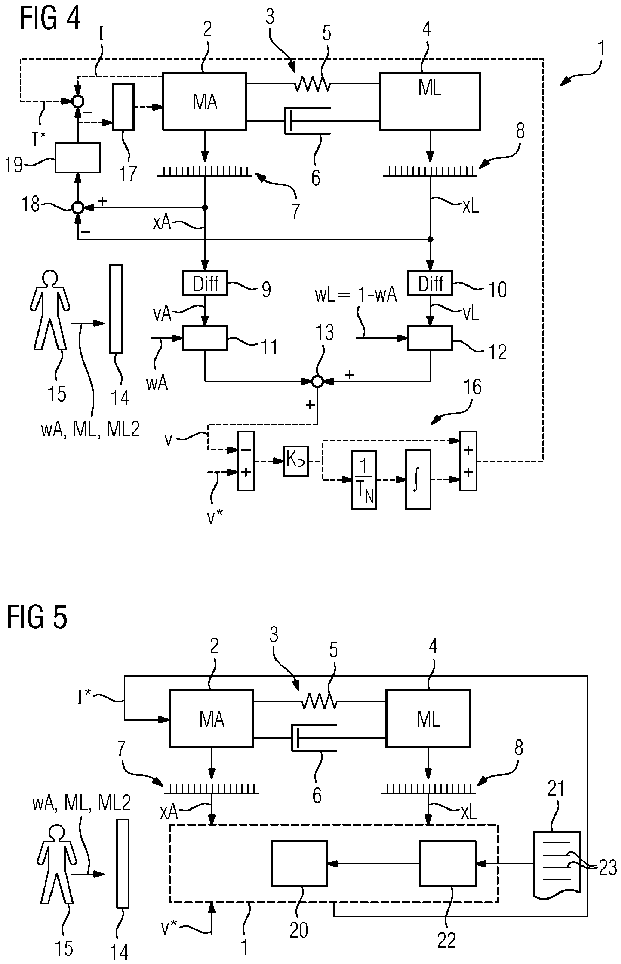

Prinzipiell kann die Stellgröße I* beliebiger Natur sein. Erfindungsgemäß ist dem Geschwindigkeitsregler 16 jedoch entsprechend der Darstellung in FIG 4 ein Stromregler 17 unterlagert. In diesem Fall ist die Stellgröße I* des Geschwindigkeitsreglers 13 ein Stromsollwert, der dem Stromregler 17 zugeführt wird. Dem Stromregler 17 wird als weitere Eingangsgröße ein Stromistwert I zugeführt.

Weiterhin werden entsprechend der Darstellung von FIG 4 in einem Subtrahierer 18 die Lage xA des elektrischen Antriebs 2 und die Lage xL der Last 4 voneinander subtrahiert. Die dadurch gebildete Differenz wird dem Stromregler 17 als Vorsteuersignal zugeführt. Soweit erforderlich, kann die Differenz vor dem Zuführen zum Stromregler 17 in einem Multiplizierer 19 mit einem weiteren Wichtungsfaktor gewichtet werden. Soweit erforderlich, kann weiterhin die Differenz der Lagewerte xa, xL vor dem Zuführen zum Stromregler 17 - im Falle einer Wichtung vor dem Wichten mit dem weiteren Wichtungsfaktor - um einen Offset korrigiert werden.

Dem Geschwindigkeitsregler 16 kann weiterhin ein Lageregler überlagert sein. Der Lageregler ist in den FIG 3 bis 5 nicht mit dargestellt, da er im Rahmen der vorliegenden Erfindung von untergeordneter Bedeutung ist.

Die Regelanordnung 1 kann softwaretechnisch realisiert sein. Dies gilt insbesondere für die Regelanordnung 1 gemäß FIG 4. Im Falle einer softwaretechnischen Realisierung weist die Regelanordnung 1 entsprechend der Darstellung von FIG 5 (unter anderem) eine Recheneinrichtung 20 auf. Die Recheneinrichtung 20 führt ein Computerprogramm 21 aus, das in einem internen Speicher 22 der Regelanordnung 1 hinterlegt ist. Das Computerprogramm 21 umfasst Maschinencode 23, der von der Regelanordnung 1 (genauer: der Recheneinrichtung 20 der Regelanordnung 1) unmittelbar ausführbar ist. Die Ausführung des Maschinencodes 23 durch die Recheneinrichtung 20 bewirkt in diesem Fall die entsprechende Ausbildung der Regelanordnung 1.

Die vorliegende Erfindung weist viele Vorteile auf. Insbesondere kann auf einfache Weise eine stabile, hoch dynamische Geschwindigkeitsregelung des elektrischen Antriebs 2 erfolgen. Wesentlich an der erfindungsgemäßen Vorgehensweise ist die Kaskadierung. Durch die Ermittlung der resultierenden Geschwindigkeit v wird aus Sicht des Geschwindigkeitsreglers 16 die Regelstrecke verändert. Alle weiteren Verfahren zur Geschwindigkeits- und gegebenenfalls Lageregelung und auch eine etwaige APC (= advanced positioning control) können unverändert beibehalten werden. Lediglich die Voraussetzungen für deren Parametrierung werden im Rahmen der vorliegenden Erfindung gezielt beeinflusst.

Die erfindungsgemäße Regelanordnung 1 ist prinzipiell universell einsetzbar. Bevorzugte Anwendungen sind jedoch die lagegeregelten Achsen von Werkzeugmaschinen, Produktionsmaschinen, Industrierobotern und dergleichen mehr.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1.  Regelanordnung zum Regeln der Geschwindigkeit (vA) eines elektrischen Antriebs (2), der über eine elastische gedämpfte Kopplung (3) auf eine Last (4) wirkt,

    - wobei die Regelanordnung Ermittlungseinrichtungen (9, 10) aufweist, mittels derer basierend auf Messwerten (xA, xL) eine Geschwindigkeit (vA) des elektrischen Antriebs (2) und eine Geschwindigkeit (vL) der Last (4) ermittelt werden,
    - wobei die Regelanordnung eine Verknüpfungseinrichtung (11 bis 13) aufweist, mittels derer durch eine Verknüpfung der beiden Geschwindigkeiten (vA, vL) eine resultierende Geschwindigkeit (v) ermittelt wird,
    - wobei die Regelanordnung einen Geschwindigkeitsregler (16) aufweist, dem die resultierende Geschwindigkeit (v) als Geschwindigkeitsistwert zugeführt wird, dem als weitere Eingangsgröße ein Geschwindigkeitssollwert (v*) zugeführt wird und von dem eine Stellgröße (I*) für den elektrischen Antrieb (2) ausgegeben wird,
    - wobei die Ermittlungseinrichtungen (9, 10) derart ausgebildet sind, dass die Ermittlung der Geschwindigkeit (vA) des Antriebs (2) und der Geschwindigkeit (vL) der Last (4) derart erfolgt, dass diese beiden Geschwindigkeiten (vA, vL) jederzeit in einem konstanten Verhältnis stünden, wenn die Kopplung (3) absolut starr wäre, und
    - wobei die Verknüpfungseinrichtung (11 bis 13) Multiplizierer (11, 12) und einen Addierer (13) aufweist, mittels derer die resultierende Geschwindigkeit (v) durch Wichtung der ermittelten Geschwindigkeiten (vA, vL) mit einem jeweiligen Wichtungsfaktor (wA, wL) und nachfolgende Addition der gewichteten Geschwindigkeiten ermittelt wird,
    **dadurch gekennzeichnet,**
    - **dass** dem Geschwindigkeitsregler (16) ein Stromregler (17) unterlagert ist,
    - **dass** die Stellgröße (I*) des Geschwindigkeitsreglers (16) ein dem Stromregler (17) zugeführter Stromsollwert ist,
    - **dass** dem Stromregler (17) als weitere Eingangsgröße ein Stromistwert (I) zugeführt wird und
    - **dass** dem Stromregler (17) als Vorsteuersignal eine Differenz der Lage (xA) des elektrischen Antriebs (2) und der Lage (xL) der Last (4) zugeführt wird.

2.  Regelanordnung nach Anspruch 1,
    **dadurch gekennzeichnet, dass** die Regelanordnung eine Bestimmungseinrichtung aufweist, mittels derer die Wichtungsfaktoren (wA, wL) von der Regelanordnung selbsttätig bestimmt werden, und dass die Bestimmungseinrichtung zu diesem Zweck entweder den Wichtungsfaktor (wA) für die Geschwindigkeit (vA) des Antriebs (2) auf den Wert 1 und hiermit korrespondierend den Wichtungsfaktor (wL) für die Geschwindigkeit (vL) der Last (4) auf den Wert 0 setzt, sodann den Frequenzgang erfasst und anhand einer Auswertung des erfassten Frequenzgangs die Wichtungsfaktoren (wA, wL) bestimmt oder die Wichtungsfaktoren (wA, wL) nacheinander auf verschiedene Werte setzt, jeweils den korrespondierenden Frequenzgang erfasst und anhand eines Vergleichs der sich ergebenden Frequenzgänge die Wichtungsfaktoren (wA, wL) bestimmt.

3.   Regelanordnung nach Anspruch 1,
**dadurch gekennzeichnet, dass** sie eine Mensch-Maschine-Schnittstelle (14) aufweist, über welche die Wichtungsfaktoren (wA, wL) der Regelanordnung von einem Bediener (15) direkt vorgegeben werden.

4.   Regelanordnung nach Anspruch 1,
**dadurch gekennzeichnet, dass** sie eine Mensch-Maschine-Schnittstelle (14) aufweist, über welche die Wichtungsfaktoren (wA, wL) der Regelanordnung von einem Bediener (15) indirekt vorgegeben werden.

5.   Regelanordnung nach Anspruch 4,
**dadurch gekennzeichnet, dass** der Regelanordnung vom Bediener (15) über die Mensch-Maschine-Schnittstelle (14) eine Gesamtmasse (ML) der Last (4) vorgegeben wird oder dass die Gesamtmasse (ML) der Last (4) sich aus einem konstanten und einem veränderlichen Anteil (ML1, ML2) zusammensetzt und der Regelanordnung vom Bediener (15) über die Mensch-Maschine-Schnittstelle (14) der veränderliche Anteil (ML2) der Last (4) vorgegeben wird und dass die Regelanordnung die Wichtungsfaktoren (wA, wL) anhand der Gesamtmasse (ML) der Last (4) und einer Gesamtmasse (MA) des Antriebs (2) ermittelt.

6.   Regelanordnung nach einem der obigen Ansprüche,
**dadurch gekennzeichnet, dass** die Ermittlungseinrichtungen (9, 10) derart ausgebildet sind, dass sie die Geschwindigkeiten (vA, vL) direkt erfassen oder erfasste Lagewerten (xA, xL) differenzieren oder erfasste Beschleunigungen integrieren.

7.   Regelanordnung nach einem der obigen Ansprüche,
**dadurch gekennzeichnet, dass** sie eine Recheneinrichtung (20) aufweist, die ein in einem internen Speicher (22) der Regelanordnung hinterlegtes Computerprogramm (21) ausführt, dass das Computerprogramm (21) von der Recheneinrichtung (20) unmittelbar ausführbaren Maschinencode (23) umfasst und dass die Ausführung des Maschinencodes (23) durch die Recheneinrichtung (20) die Ausbildung der Regelanordnung bewirkt.

8.   Computerprogramm, das Maschinencode (23) umfasst, der von einer Regelanordnung für einen elektrischen Antrieb (2) unmittelbar ausführbar ist, wobei der elektrische Antrieb (2) über eine elastische gedämpfte Kopplung (3) auf eine Last (4) wirkt, wobei die Ausführung des Maschinencodes (23) bewirkt, dass die Regelanordnung (1) als Regelanordnung nach Anspruch 7 ausgebildet ist.

**Claims**

1.   Regulating assembly for regulating the speed (vA) of an electric drive (2), which acts on a load (4) by way of an elastically damped coupling (3),

- wherein the regulating assembly has determination devices (9, 10), by means of which a speed (vA) of the electric drive (2) and a speed (vL) of the load (4) are determined on the basis of measured values (xA, xL),
- wherein the regulating assembly has a linking device (11 to 13), by means of which a resulting speed (v) is determined by linking the two speeds (vA, vL),
- wherein the regulating assembly has a speed regulator (16), to which the resulting speed (v) is supplied as an actual speed value, to which a speed target value (v*) is supplied as the further input variable and from which an actuating variable (I*) for the electric drive (2) is output,
- wherein the determination devices (9, 10) are embodied so that the determination of the speed (vA) of the drive (2) and the speed (vL) of the load (4) is carried out so that these two speeds (vA, vL) are constantly related at any time if the coupling (3) were to be absolutely rigid, and
- wherein the linking device (11 to 13) has multipliers (11, 12) and an adder (13), by means of which the resulting speed (v) is determined by weighting the determined speeds (vA, vL) with a respective weighting factor (wA, wL) and subsequently adding the weighted speeds,
**characterised in that**

- a current regulator (17) is subjected to the speed regulator (16),
- the actuating variable (I*) of the speed regulator (16) is a current target value fed to the current regulator (17),
- a current actual value (I) is fed to the current regulator (17) as a further input variable and

- a difference between the position (xA) of the electric drive (2) and the position (xL) of the load (4) is fed to the current regulator (17) as a pilot control signal.

2. Regulating assembly according to claim 1,
   **characterised in that**
   the regulating assembly has a determination device, by means of which the weighting factors (wA, wL) are determined automatically by the regulating assembly, and that the determination device, for this purpose, either sets the weighting factor (wA) for the speed (vA) of the drive (2) to the value 1 and herewith correspondingly the weighting factor (wL) for the speed (vL) of the load (4) to the value 0, then detects the frequency response and on the basis of an evaluation of the detected frequency response determines the weighting factors (wA, wL) or sets the weighting factors (wA, wL) consecutively to different values, detects the corresponding frequency response in each case and determines the weighting factors (wA, wL) on the basis of a comparison of the resulting frequency responses.

3. Regulating assembly according to claim 1,
   **characterised in that** it has a human-machine interface (14), by way of which the weighting factors (wA, wL) of the regulating assembly are predetermined directly by an operator (15) .

4. Regulating assembly according to claim 1,
   **characterised in that** it has a human-machine interface (14), by way of which the weighting factors (wA, wL) of the regulating assembly are predetermined indirectly by an operator (15).

5. Regulating assembly according to claim 4,
   **characterised in that** a total mass (ML) of the load (4) is predetermined to the regulating assembly by the operator (15) by way of the human-machine interface (14) or that the total mass (ML) of the load (4) is composed of a constant and a changeable portion (ML1, ML2) and the changeable portion (ML2) of the load (4) is predetermined to the regulating assembly by the operator (15) by way of the human-machine interface (14) and that the regulating assembly determines the weighting factors (wA, wL) on the basis of the total mass (ML) of the load (4) and a total mass (MA) of the drive (2).

6. Regulating assembly according to one of the above claims, **characterised in that**
   the determination devices (9, 10) are embodied so that they detect the speeds (vA, vL) directly or differentiate the detected position values (xA, xL) or integrate detected accelerations.

7. Regulating assembly according to one of the above claims, **characterised in that**
   it has a computing device (20), which carries out a computer program (21) stored in an internal storage unit (22) of the regulating assembly, that the computer program (21) of the computing device (20) comprises directly executable machine code (23) and that the execution of the machine code (23) by the computing device (20) brings about the development of the regulating assembly.

8. Computer program comprising machine code (23) which can be executed directly by a regulating assembly for an electric drive (2), wherein the electric drive (2) acts on a load (4) by way of an elastic damped coupling (3), wherein the execution of the machine code (23) causes the regulating assembly (1) to be embodied as a regulating assembly according to claim 7.

**Revendications**

1. Système de régulation pour réguler la vitesse (vA) d'un entraînement (2) électrique, qui agit sur une charge (4) par un accouplement (3) élastique amorti,

   - dans lequel le système de régulation a des moyens (9, 10) de détermination, au moyen desquels on détermine, sur la base de valeurs (xA, xL) de mesure, une vitesse (vA) de l'entraînement (2) électrique et une vitesse (vL) de la charge (4),
   - dans lequel le système de régulation a un dispositif (11 à 13) de combinaison au moyen duquel on détermine une vitesse (Vv) résultante par une combinaison des deux vitesses (vA, vL),
   - dans lequel le système de régulation a un régleur (16) de vitesse, auquel on envoie la vitesse (v) résultante comme valeur réelle de vitesse, auquel on envoie, comme autre grandeur d'entrée, une valeur (v*) de consigne de vitesse et par lequel on émet une grandeur (I*) de réglage de l'entraînement (2) électrique,

- dans lequel les dispositifs (9, 10) de détermination sont constitués de manière à ce que la détermination de la vitesse (vA) de l'entraînement (2) et de la vitesse (vL) de la charge s'effectuent de manière à ce que ces deux vitesses (vA, vL) resteraient tout le temps dans un rapport constant si l'accouplement (3) était absolument rigide et

- dans lequel le dispositif (11 à 13) de combinaison a des multiplicateurs (11, 12) et un additionneur (13), au moyen desquels on détermine la vitesse (v) résultante par pondération des vitesses (vA, vL) déterminées par un facteur (wA, wL) de pondération respectif et par addition ensuite des vitesses pondérées,

**caractérisé en ce que**

- un régleur (17) de courant est subordonné au régleur (16) de vitesse,

- **en ce que** la grandeur (I*) de réglage du régleur (16) de vitesse est une valeur de consigne de courant envoyée au régleur (17) de vitesse,

- **en ce que** l'on envoie au régleur (17) de courant une valeur (I) réelle de courant comme autre grandeur d'entrée et

- **en ce que** l'on envoie au régleur (17) de courant, comme signal pilote, une différence entre la position (xA) de l'entraînement (2) électrique et la position (xL) de la charge.

2. Système de régulation suivant la revendication 1, **caractérisé en ce que** le système de régulation a un dispositif de détermination, au moyen duquel les facteurs (wA, wL) de pondération sont déterminés automatiquement par le système de régulation et **en ce que** le dispositif de détermination fixe à cet effet soit le facteur (wA) de pondération de la vitesse (vA) de l'entraînement (2) à la valeur 1 et ainsi, de manière correspondante, le facteur (wL) de pondération de la vitesse (VL) de la charge à la valeur 0, relève ensuite la réponse fréquentielle et, à l'aide d'une exploitation de la réponse fréquentielle relevée, détermine les facteurs (wA, wL) de pondération soit fixe les facteurs (wA, wL) de pondération l'un après l'autre à des valeurs différentes, relève respectivement la réponse fréquentielle correspondante et, à l'aide d'une comparaison des réponses fréquentielles obtenues, détermine les facteurs (wA, wL) de pondération.

3. Système de régulation suivant la revendication 1, **caractérisé en ce qu'**il a une interface (14) homme-machine, par laquelle les facteurs (wA, wL) de pondération sont prescrits directement par un opérateur (15) au système de régulation.

4. Système de régulation suivant la revendication 1, **caractérisé en ce qu'**il a une interface (14) homme-machine, par laquelle les facteurs (wA, wL) de pondération sont prescrits indirectement par un opérateur (15) au système de régulation.

5. Système de régulation suivant la revendication 4, **caractérisé en ce qu'**il est prescrit au système de régulation par l'opérateur (15) par l'intermédiaire de l'interface (14) homme-machine une masse (ML) totale de la charge (4) ou **en ce que** la masse (ML) totale de la charge (4) se compose d'une proportion (ML1) constante et d'une proportion (ML2) variable et il est prescrit au système de régulation par l'opérateur (15) la proportion (ML2) variable de la charge par l'intermédiaire de l'interface (14) homme-machine et **en ce que** le système de régulation détermine les facteurs (wA, wL) de pondération à l'aide de la masse (ML) totale de la charge (4) et d'une masse (MA) totale de l'entraînement (2).

6. Système de régulation suivant l'une des revendications précédentes, **caractérisé en ce que** le dispositif (9, 10) de détermination est constitué de manière à relever directement les vitesses (vA, vL) ou à différencier des valeurs (xA, xL) de position relevées ou à intégrer des accélérations relevées.

7. Système de régulation suivant l'une des revendications précédentes, **caractérisé en ce qu'**il a un dispositif (20) informatique, qui exécute un programme (21) d'ordinateur mis en mémoire dans une mémoire (22) interne du système de régulation, **en ce que** le programme (21) d'ordinateur comprend des codes (23) machine réalisables directement par le dispositif (20) informatique et **en ce que** la réalisation du code (23) machine par le dispositif (20) informatique provoque la constitution du système de régulation.

8. Programme d'ordinateur qui comprend des codes (23) machine qui peut être réalisé directement par un système de régulation d'un entraînement (2) électrique, l'entraînement électrique agissant sur une charge (4) par un accouplement (3) élastique amorti, la réalisation du code (23) machine faisant que le système (1) de régulation est constitué en système de régulation suivant la revendication 7.

FIG 1

FIG 2

# FIG 3

# FIG 4

# FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050093492 A1
- DE 10302374 B3

- DE 10246093 C1